# EUROPEAN PATENT APPLICATION

(11) **EP 4 687 029 A1**
(43) Date of publication of application: **04.02.2026**
(21) Application number: 25184505.3
(22) Date of filing: 23.06.2025
(51) Int. Cl.: G06F 8/35, G06F 9/445, G06F 21/60, G06N 3/02

(54) **METHOD AND SYSTEM FOR DYNAMIC GUARDRAILS FRAMEWORK WITH PLUG-IN FOR LARGE LANGUAGE MODELS (LLMS)**

(30) Priority: 30.07.2024 IN 202421057748
(71) Applicant: Tata Consultancy Services Limited, Maharashtra (IN)
(72) Inventor: KAPASE, Mrunali Hindeshwar, Pune, Maharashtra 411057 (IN); KALELE, Amit, Pune, Maharashtra 411057 (IN); BHAT, Jyoti, Banglore, Karnataka 560066 (IN)
(74) Representative: Goddar, Heinz J.

(57) **Abstract**

A method and system for dynamic guardrails framework with plug-in functionality for Large Language Model (LLM) application is disclosed. The user requirements stating validations, validation preferences and threshold, and actions on these validations received via configuration file are used to select experts using pretrained LLMs. A wrapper comprising the basic guard rail code based on config file is generated and then optimized over iterative process using prompt optimization for guardrail code generation. The prompt optimizer is configured to generate updated prompt by analyzing the reason for failure or earlier created wrapper against the checks. The guardrail framework comprises a group of infinite tools with pretrained LLMs for specific tasks. The LLM based expert selection in accordance the configuration file enables only required experts to be used. The deliverable guardrail code is a plug-in to be inserted into an LLM application treated as Blackbox without interfering with user prompt.

## Description

### CROSS-REFERENCE TO RELATED APPLICATIONS AND PRIORITY

The present application claims priority from Indian patent application no. 202421057748, filed on 30 July 2024.

### TECHNICAL FIELD

The embodiments herein generally relate to the field of Large Language Models (LLMs) and, more particularly, to a method and system for dynamic guardrails framework with plug-in for LLM applications.

### BACKGROUND

The implementation of robust safeguards/guardrails has become a paramount necessity for any solution that harnesses the power of large language models (LLMs) to ensure privacy and security in the realm of artificial intelligence. Guardrails enforce the output of an LLM to be in a specific format or context while validating each response. By implementing guardrails, users can define structure, type, and quality of LLM responses.

In the application of large language models (LLMs), guardrails are necessary at multiple stages: the input stage, where user input text is checked for validity and security, the intermediate stage, where the text is validated for quality to take appropriate decision and the output stage, where the generated response from the LLM is scrutinized before being presented to the user. While there are various types of checks that can be conducted, it is not always necessary or efficient to perform all of them at all stages. Instead, it is feasible to identify and perform only the required checks for a particular use case, optimizing time and resources. For some checks, also referred to as experts, some thresholds need to be set to take proper action over it. Different levels of guardrails require different set of thresholds and corresponding experts in LLM application. In the context of LLM the experts are the agents or tools, which can be external resources, services, or APIs (Application Programming Interfaces) that the agent or expert can utilize to perform specific tasks or enhance LLM capabilities. If all possible combinations of experts, actions, thresholds & levels is considered, the process can growth exponentially with an increase in the number of experts. To make it more scalable, customization is required per level of guardrailing.

An LLM application, for any use case comprises three level: i) user input/prompt, ii) LLM system having the foundational models, and iii) the LLM response. There can be guardrails needed for at least one or all of the levels, with each level guardrail requiring different validations performed by associated experts and different thresholds of those validations.

Suppose there are 25 experts available, then:
Scenario 1: For a given use case with LLM application, guardrailing is to be applied at input level in LLM application and it needs only 10 expert checks out of 25 with some set of thresholds and actions per expert.
Scenario 2: To apply guardrailing at Output level in LLM application needs different set of experts to be executed say 15 out of 25 with some thresholds and actions.
Scenario 3: To apply guardrailing in any intermediate levels in LLM applications (if needed) needs again a different set of experts to be executed with some set of thresholds and actions.

Here, it can be seen that for a single use case, there are so many combinations of experts, thresholds & actions. It will multiply by number of use cases. If someone wants to customize it as per requirement then re-writing/updating of code is required, each time. Thus, to scale up the guardrailing ask for custom requirements and making in time efficient , automation needs to be explored.

However, automation of guardrail code to address customization has technical challenges due to complexities of the user specific requirements and various possibilities and scenarios that need to be addressed.

Furthermore, with existing solutions, the guardrail that is created when implemented interfere with the LLM application or modifies the user prompt, which is not a desired feature, and the solution then becomes less flexible for quick implementation.

### SUMMARY

Embodiments of the present disclosure present technological improvements as solutions to one or more of the above-mentioned technical problems recognized by the inventors in conventional systems.

For example, in one embodiment, a method for dynamic guardrails framework with plug-in for LLM application is provided.

The method includes creating a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each of the set of validations.

Further, the method includes determining via an expert selection LLM i) a set of experts from among a plurality of experts in accordance with the customized guardrails configuration file, ii) a sequence of the set of experts to be executed, and iii) a set of input parameters comprising applicable thresholds and actions to each of the set of experts.

The method includes generating a wrapper via a wrapper generator LLM using a seed prompt, the wrapper comprising a code with a set of function calls to the set of experts defined in an order and with associated actions and thresholds tagged to each of the set of experts.

The method includes optimizing the wrapper by revising the code via the wrapper generator LLM, to obtain a deliverable guardrail code by iteratively optimizing the seed prompt. Each iteration comprises: validating the wrapper for a set of predefined checks and a set of dynamically generated checks; detecting, on occurrence of failure, a reason for failure of one or more of the set of predefined checks and the set of dynamically generated checks; converting the detected reason to a prompt by a reason to prompt converter LLM; optimizing the seed prompt, via an prompt optimizer LLM, in accordance with the prompt obtained from the reason; and optimizing the wrapper in accordance with the optimized seed prompt in each iteration until the set of predefined checks and the set of dynamically generated checks are cleared by the wrapper to obtain the deliverable guardrail code.

Furthermore, the method includes providing the deliverable guardrail code as a plug-in into the LLM application without modifying the LLM application by treating the LLM application as a Blackbox.

In another aspect, a system for dynamic guardrails framework with plug-in for LLM application is provided. The system comprises a memory storing instructions; one or more Input/Output (I/O) interfaces; and one or more hardware processors coupled to the memory via the one or more I/O interfaces, wherein the one or more hardware processors are configured by the instructions to create a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each of the set of validations.

Further, the one or more hardware processors are configured to determine via an expert selection LLM i) a set of experts from among a plurality of experts in accordance with the customized guardrails configuration file, ii) a sequence of the set of experts to be executed, and iii) a set of input parameters comprising applicable thresholds and actions to each of the set of experts.

The one or more hardware processors are configured to generate a wrapper via a wrapper generator LLM using a seed prompt, the wrapper comprising a code with a set of function calls to the set of experts defined in an order and with associated actions and thresholds tagged to each of the set of experts.

The one or more hardware processors are configured to optimizing the wrapper by revising the code via the wrapper generator LLM, to obtain a deliverable guardrail code by iteratively optimizing the seed prompt. Each iteration comprises: validating the wrapper for a set of predefined checks and a set of dynamically generated checks; detecting, on occurrence of failure, a reason for failure of one or more of the set of predefined checks and the set of dynamically generated checks; converting the detected reason to a prompt by a reason to prompt converter LLM; optimizing the seed prompt, via an prompt optimizer LLM, in accordance with the prompt obtained from the reason; and optimizing the wrapper in accordance with the optimized seed prompt in each iteration until the set of predefined checks and the set of dynamically generated checks are cleared by the wrapper to obtain the deliverable guardrail code.

Furthermore, the one or more hardware processors are configured to provide the deliverable guardrail code as a plug-in into the LLM application without modifying the LLM application by treating the LLM application as a Blackbox.

In yet another aspect, there are provided one or more non-transitory machine-readable information storage mediums comprising one or more instructions, which when executed by one or more hardware processors causes a method for dynamic guardrails framework with plug-in for LLM application.

The method includes creating a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each of the set of validations.

Further, the method includes determining via an expert selection LLM i) a set of experts from among a plurality of experts in accordance with the customized guardrails configuration file, ii) a sequence of the set of experts to be executed, and iii) a set of input parameters comprising applicable thresholds and actions to each of the set of experts.

The method includes generating a wrapper via a wrapper generator LLM using a seed prompt, the wrapper comprising a code with a set of function calls to the set of experts defined in an order and with associated actions and thresholds tagged to each of the set of experts.

The method includes optimizing the wrapper by revising the code via the wrapper generator LLM, to obtain a deliverable guardrail code by iteratively optimizing the seed prompt. Each iteration comprises: validating the wrapper for a set of predefined checks and a set of dynamically generated checks; detecting, on occurrence of failure, a reason for failure of one or more of the set of predefined checks and the set of dynamically generated checks; converting the detected reason to a prompt by a reason to prompt converter LLM; optimizing the seed prompt, via an prompt optimizer LLM, in accordance with the prompt obtained from the reason; and optimizing the wrapper in accordance with the optimized seed prompt in each iteration until the set of predefined checks and the set of dynamically generated checks are cleared by the wrapper to obtain the deliverable guardrail code.

Furthermore, the method includes providing the deliverable guardrail code as a plug-in into the LLM application without modifying the LLM application by treating the LLM application as a Blackbox.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system for dynamic guardrails framework with plug-in for Large Language Model (LLM) application, in accordance with some embodiments of the present disclosure.
FIG. 1B illustrates an architectural overview of the system of FIG. 1A, in accordance with some embodiments of the present disclosure.
FIGS. 2A and 2B (collectively referred as FIG. 2) is a flow diagram illustrating a method for dynamic guardrails framework with plug-in for the LLM application, using the system depicted in FIG. 1A and 1B, in accordance with some embodiments of the present disclosure.
FIGS. 3 illustrates a process flow of a prompt optimizer for creating deliverable guardrail code, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

With all the growing concerns about privacy and security with Artificial Intelligence (AI), guardrails have become an integral part of any solution that leverages Gen AI or Large Language Models (LLMs). But the guardrails frameworks today do not provide flexibility to the user in terms of customizing and validating a use-case specific scenario. Also, customizing a guardrail framework for a given use-case involves a lot of manual tasks and is not scalable. This creates a major problem in getting the data validated keeping your requirement in mind. A method herein provides scalability of addition of various tools used as experts and customization of the same for a use-case.

Embodiments of the present disclosure provide a method and system for dynamic guardrails framework with plug-in functionality for Large Language Model (LLM) application. The method and system provides a generic, unified framework to capture and execute the user requirement in real-time thereby reducing all the time and effort required of customizing guardrails for a specific use-case. The user requirements stating validations, validation preferences and thresholds, and actions on these validations received via configuration file and are used to select experts using pretrained LLMs. In the context of LLM the experts or 'a group of experts referred to as policy' are external resources, Application programming Interfaces (APIs) which address the necessary validations in guardrailing an LLM application. The system generates a wrapper which calls the experts comprising the external resources, services, or APIs (Application Programming Interfaces). Basic guardrail code based on configuration file (config file) is generated and then optimized over iterative process using prompt optimization for generation of a deliverable guardrail code (also referred to as deliverable code or guard rail code hereinafter). The prompt optimizer is configured to generate updated prompt by analyzing the reason for failure or earlier created wrapper against the checks. The guardrail framework comprises a group of infinite tools with pretrained LLMs for specific tasks. The LLM based expert selection in accordance the configuration file provides only required experts to be used. Thus minimizing use of external resources and time consumed for execution of unwanted experts. The deliverable guardrail code is a plug-in to be inserted into an LLM application from which user requirements where received. The plug-in enables the guardrail to be non-interfering with the LLM application, unlike existing guardrails, and hence makes easier and more flexible in implementation. Thus, the system treats LLM application treated as Blackbox without requirement of interfering with user prompt of the LLM application.

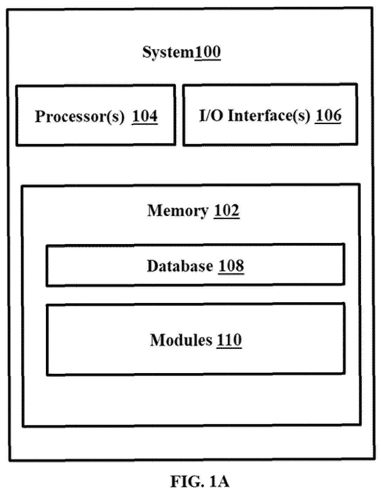

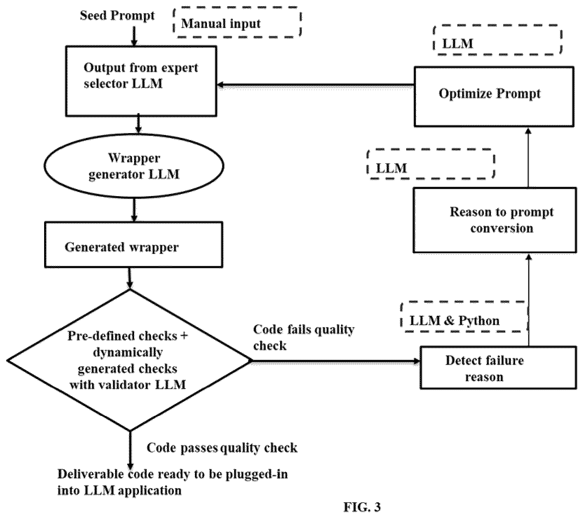

Referring now to the drawings, and more particularly to FIGS. 1A through 3, where similar reference characters denote corresponding features consistently throughout the figures, there are shown preferred embodiments, and these embodiments are described in the context of the following exemplary system and/or method.

FIG. 1A is a functional block diagram of a system 100 for dynamic guardrails framework plug-in for Large Language Model (LLM) application, in accordance with some embodiments of the present disclosure.

In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110. The plurality of modules 110 include programs or coded instructions that supplement applications or functions performed by the system 100 for executing different steps involved in the process of customized guardrail generation, being performed by the system 100.

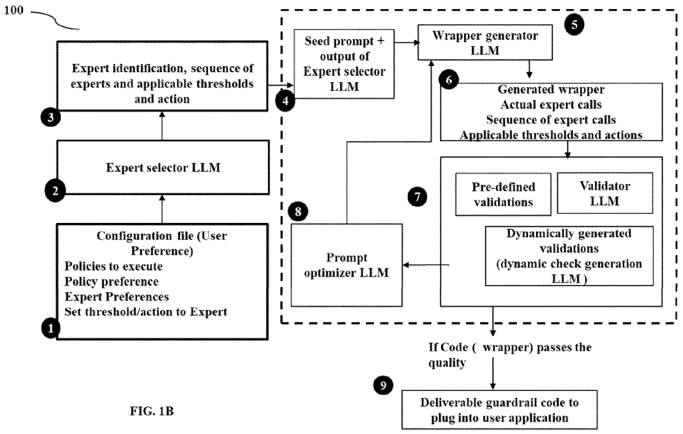

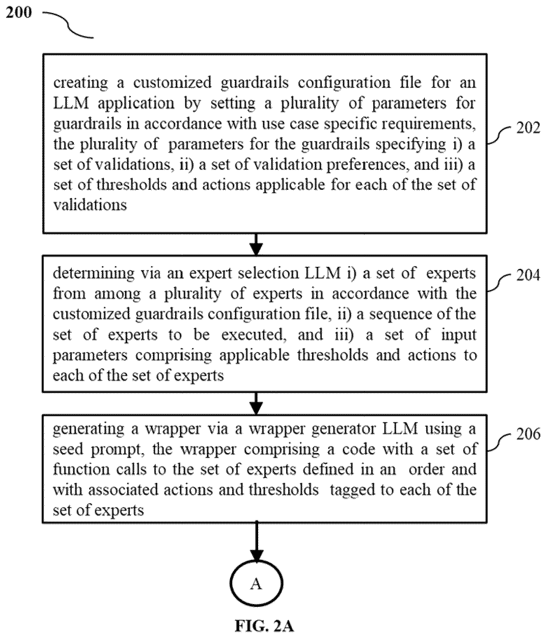

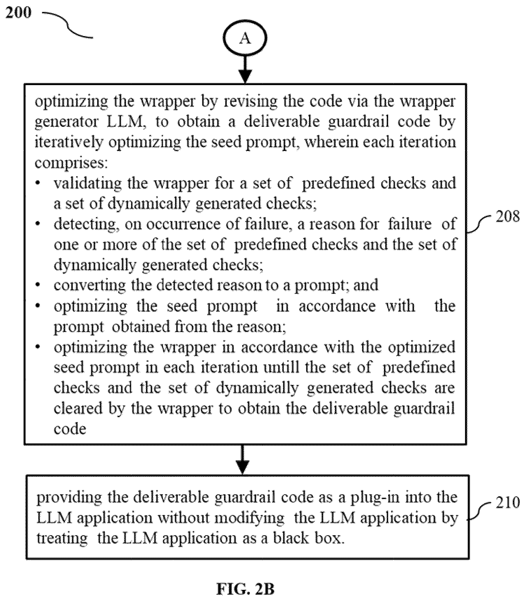

Further, the plurality of modules 110 also includes a set of LLMs such as an expert selection LLM, a wrapper generator LLM, a dynamic check generation LLM, reason to prompt converter LLM, and an prompt optimizer LLM, a validator LLM each pretrained for a specific task, as explained in conjunction with architectural system diagram of FIG. 1B and method steps of FIG. 2.

The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system100 and methods of the present disclosure.

Further, the memory 102 includes a database 108. The database (or repository) 108 may include a plurality of abstracted pieces of code for refinement and data that is processed, received, or generated as a result of the execution of the plurality of modules in the module(s) 110. The database 108 can also store the configuration file and the deliverable guardrail code to be inserted as plug-in in the LLM application for which it is built.

Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS). Functions of the components of the system 100 are now explained with reference to steps in flow diagrams in FIG. 1B through FIG. 3.

FIGS. 2A through 2B (collectively referred as FIG. 2) is a flow diagram illustrating a method for dynamic guardrails framework plug-in for Large Language Model (LLM) application, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practical. Further, some steps may be performed simultaneously.

Referring to the steps of the method 200, at step 202 of the method 200, the one or more hardware processors 104 are configured by the instructions to create a customized guardrails configuration file for an LLM application by setting a plurality of parameters for guardrails in accordance with use case specific requirements. The plurality of parameters for the guardrails specify i) a set of validations, ii) a set of validation preferences, and iii) a set of thresholds and actions applicable for each of the set of validations.
Consider an example where the user specifies that he wants to validate topical relevance in his use case, and he wants to stop any query that is off topic. HE also wants to see if the query or generated answer is toxic and wants to warn whenever a toxicity query or generation occurs. Here:
- Set of validations: i) Topic relevance and ii) toxicity check (presence of toxic language by user or LLM including toxic language in the response)
- Action to take when an off topic query comes in.- stop the query
- Action to take when toxicity is detected - Indicate warning
- Validation preference : Check topical relevance and if this is validated move to toxicity check
- Set of thresholds: default . In another example, for readability score guardrail, the threshold can be set to easy medium or complex medium

Say the use case of the LLM application herein is a 'Question and Answer 'system for Human Resource Department. Here queries like "how many Sick Leaves (SL) can a person take in a year' or 'what do Earned Leaves (EL) refer to' are relevant topics. But if the user asks what the molecular formula of water is or how to insult someone this becomes an invalid query for this use case.

Table 1 below, further provides examples where multiple experts can be grouped into respective policies in the configuration.

**Table 1:**

| **Policies** | **Experts grouped under policy** |
|---|---|
| Generation Relevance | Similarity scores between prompt/responses |
| | Grounding |
| Query Relevance | Classification into topic/non-topic |
| Toxicity | Content Safety |
| Security & privacy | PII |
| | Jailbreak |
| Quality | readability score |

FEW EXAMPLE CONFIGURATION FILE CODE with PARAMETRS are provided below:

### Example:

### User policy requirements in preference order:

Security and privacy
Topical relevance with action stop
toxicity
[policies_to_apply]
query_relevance = True
security_privacy = True
toxicity = True
generation_relevance = False
quality = False
policy_preference = security_privacy,query_relevance,toxicity

[query_relevance]
topical_action= stop

[security_privacy]
expert_preference = jailbreak, pii
pii_action = pass
jailbreak_action = stop
[toxicity]
content_safty_action = stop
hate_severity_threshold = 3
self_harm_severity_threshold = 4
sexual_severity_threshold = 3
violence_severity_threshold = 2

At step 204 of the method 200, the one or more hardware processors 104 are configured by the instructions to determine via an expert selection LLM i) a set of experts from among a plurality of experts in accordance with the customized guardrails configuration file, ii) a sequence of the set of experts to be executed, and iii) a set of input parameters comprising applicable thresholds and actions to each of the set of experts. The expert selection LLM is pretrained. The expert selection LLM is trained to understand the experts to choose and the sequence in which the expert execution should happen. It also makes sure that the right parameters like threshold and action are passed to each of these calls. Thus, executing the experts refers to calling and using external resources, services, or APIs (Application Programming Interfaces) for validations set by user in configuration file and associated thresholds defined for the validations (default or user set).
Here, topical and toxicity experts will be invoked expert selection LLM in the same order as this is what the user wants. This LLM is also trained to understand the right parameters like action and threshold. As the user has not mentioned any threshold, the LLM makes the actual function calls to topical and toxicity experts with action as stop and warn respectively as default setting.

At step 206 of the method 200, the one or more hardware processors 104 are configured by the instructions to generate a wrapper via the wrapper generator LLM using a seed prompt. The seed prompt is what is present the code already. A programming language is selected from among a plurality of programming languages by the LLM for generating the deliverable guardrails code. The language may be specified in the configuration file. The wrapper comprising a code with a set of function calls to the set of experts defined in an order and with associated actions and thresholds tagged to each of the set of experts. This wrapper is where the actual call to the experts happens. This may look simple in the quoted example but in reality, in any LLM application the validation requirements are many and at each stage like input/output/intermediate the requirement for the set of validation and also the action required after these validation is different. So such set of combinations are created, which cannot be handled manually with ease.

### SAMPLE WRAPPER :

```
 python‴
 from .tools.relevance import *
 from .tools.content_safety.toxicity import *
 q_relevance_output = query_relevance(query, topical_action= stop)
 toxicity_output = toxicity(query, content_safty_action = warn,
 hate_severity_threshold = 3, self_harm_severity_threshold = 4 ,
 sexual_severity_threshold = 3, violence_severity_threshold = 2)
 consolidated_output = consolidate([q_relevance_output,toxicity_output])
 ‴
```

At step 208 of the method 200, the one or more hardware processors 104 are configured by the instructions to optimize the wrapper by revising the code via the wrapper generator LLM, to obtain a deliverable guardrail code by iteratively optimizing the seed prompt. Each iteration comprises steps of:
1. Validating the wrapper for a set of predefined checks and a set of dynamically generated checks.
2. Detecting, on occurrence of failure of a validation among the set of validations, a reason for failure of one or more of the set of predefined checks and the set of dynamically generated checks. A dynamic check generation LLM is used for the set of dynamically generated checks, wherein dynamic check generation LLM:
3. obtains the guardrail configuration file as input; and
4. generates a set of possible failure cases applicable for i) the set validations, ii) the set of validation preferences, and iii) the set of thresholds and actions, to provide the set of dynamically generated checks.
5. Converting the detected reason to a prompt.
6. Optimizing the seed prompt in accordance with the prompt obtained from the reason.
7. Optimizing the wrapper in accordance with the optimized seed prompt in each iteration until the set of predefined checks and the set of dynamically generated checks are cleared by the wrapper to obtain the deliverable guardrail code.

When the wrapper is generated the generation optimization begins. First, it starts with the set of pre-defined checks like syntax, indentation, and compilation check. Then the very important step of dynamically generating the applicable check begins. Here, for example, the very important validation is to make sure that the call made is in fact to the 'topical expert' and the action taken is correct. Say, the wrapper generate, mistakenly includes of calling 'jailbreak' validation expert instead of topical by generated by the expert selection LLM. Now this becomes out failure case and will be elaborated promptly and will be sent back to the wrapper generation LLM for re-generating the wrapper and this process continues till we get all the quality check passed.

The dynamic check generation LLM is used for the set of dynamically generated checks, wherein dynamic check generation LLM:
a) obtains the guardrail configuration file as input; and
b) generates a set of possible failure cases applicable for the set validations, , to provide the set of dynamically generated checks.

Here, possible (not necessarily limited to) validations are:
To check if the function call made is in fact for topical expert
To check if the action requirement passed to expert function call is stop
To check if any unnecessary function calls are made

Further, the validator LLM and a set of scripts (for example python scripts) check whether the set of possible failure cases appear in the wrapper

At step 210 of the method 200, the one or more hardware processors 104 are configured by the instructions to providing the deliverable guardrail code as a plug-in into the LLM application without modifying the LLM application by treating the LLM application as a Blackbox. Thus, the guardrail plug-in can be generated by the system for any level of the LLM application such as (input, intermediate and/or output), as required without interfering with the LL application.

The current guardrail applications need access to user code. They also modify the user prompt resulting in unexpected behaviors and add to possible failures and defects. This is also a privacy concern for many users. The proposed solution does absolutely what is required but does not touch the user code which means user does not have to worry about any privacy and security issues and need not worry about any new bug, error, or failure possibilities.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. The processor implemented method (200) for creating guardrails for Large Language Model (LLM) applications, the method comprising:
creating (202), via one or more hardware processors, a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each validation of the set of validations;
determining (204), by the one or more hardware processors via an expert selection LLM i) a set of experts from among a plurality of experts in accordance with the customized guardrails configuration file, ii) a sequence of the set of experts to be executed, and iii) a set of input parameters comprising applicable thresholds and actions to each expert of the set of experts;
generating a wrapper (206), by the one or more hardware processors via a wrapper generator LLM using a seed prompt, the wrapper comprising a code with a set of function calls to the set of experts defined in an order, with associated actions and thresholds tagged to each expert of the set of experts;
optimizing the wrapper (208) by revising the code, by the one or more hardware processors via the wrapper generator LLM, to obtain a deliverable guardrail code by iteratively optimizing the seed prompt, wherein each iteration comprises:
validating the wrapper for a set of predefined checks and a set of dynamically generated checks;
detecting, on occurrence of failure of a validation among the set of validations, a reason for failure of one or more of the set of predefined checks and the set of dynamically generated checks;
converting the detected reason to a prompt by a reason to prompt converter LLM;
optimizing the seed prompt, via a prompt optimizer LLM, in accordance with the prompt obtained from the reason; and
optimizing the wrapper in accordance with the optimized seed prompt in each iteration until the set of predefined checks and the set of dynamically generated checks are cleared by the wrapper to obtain the deliverable guardrail code; and
providing (210), by the one or more hardware processors, the deliverable guardrail code as a plug-in into the LLM application without modifying the LLM application by treating the LLM application as a black box.

2. The method as claimed in claim 1, wherein a programming language is selected from among a plurality of programming languages by the LLM for generating the deliverable guardrails code.

3. The method as claimed in claim 1, wherein a dynamic check generation LLM is used for the set of dynamically generated checks, wherein the dynamic check generation LLM:
a) obtains the guardrail configuration file as input, and
b) generates a set of possible failure cases applicable for the set validations to provide the set of dynamically generated checks.

4. The method as claimed in claim 3, wherein a validator LLM and a set of scripts check whether the set of possible failure cases appear in the wrapper.

5. A system (100) for creating guardrails for Large Language Model (LLM), the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
create a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each validation of the set of validations;
determine via an expert selection LLM i) a set of experts from among a plurality of experts in accordance with the customized guardrails configuration file, ii) a sequence of the set of experts to be executed, and iii) a set of input parameters comprising applicable thresholds and actions to each of the set of experts;
generate a wrapper via a wrapper generator LLM using a seed prompt, the wrapper comprising a code with a set of function calls to the set of experts defined in an order and with associated actions and thresholds tagged to each expert of the set of experts;
optimize the wrapper by revising the code via the wrapper generator LLM, to obtain a deliverable guardrail code by iteratively optimizing the seed prompt, wherein each iteration comprises:
validating the wrapper for a set of predefined checks and a set of dynamically generated checks;
detecting, on occurrence of failure a validation among the set of validations, a reason for failure of one or more of the set of predefined checks and the set of dynamically generated checks;
converting the detected reason to a prompt by a reason to prompt converter LLM;
optimizing the seed prompt, via an prompt optimizer LLM, in accordance with the prompt obtained from the reason; and
optimizing the wrapper in accordance with the optimized seed prompt in each iteration until the set of predefined checks and the set of dynamically generated checks are cleared by the wrapper to obtain the deliverable guardrail code; and
provide the deliverable guardrail code as a plug-in into the LLM application without modifying the LLM application by treating the LLM application as a black box.

6. The system as claimed in claim 5, wherein a programming language is selected from among a plurality of programming languages by the LLM for generating the deliverable guardrails code.

7. The system as claimed in claim 5, wherein a dynamic check generation LLM is used for the set of dynamically generated checks, wherein dynamic check generation LLM:
a) obtains the guardrail configuration file as input, and
b) generates a set of possible failure cases applicable for i) the set validations, ii) the set of validation preferences, and iii) the set of thresholds and actions, to provide the set of dynamically generated checks.

8. The system as claimed in claim 7, wherein a validator LLM and a set of scripts check whether the set of possible failure cases appear in the wrapper.

9. One or more non-transitory machine-readable information storage mediums comprising one or more instructions which when executed by one or more hardware processors:
creating a customized guardrails configuration file for an LLM application by setting a plurality of parameters for guardrails in accordance with use case specific requirements, the plurality of parameters for the guardrails specifying i) a set of validations, ii) a set of validation preferences, and iii) a set of thresholds and actions applicable for each validation of the set of validations;
determining via an expert selection LLM i) a set of experts from among a plurality of experts in accordance with the customized guardrails configuration file, ii) a sequence of the set of experts to be executed, and iii) a set of input parameters comprising applicable thresholds and actions to each expert of the set of experts;
generating a wrapper via a wrapper generator LLM using a seed prompt, the wrapper comprising a code with a set of function calls to the set of experts defined in an order, with associated actions and thresholds tagged to each expert of the set of experts;
optimizing the wrapper by revising the code via the wrapper generator LLM, to obtain a deliverable guardrail code by iteratively optimizing the seed prompt, wherein each iteration comprises:
validating the wrapper for a set of predefined checks and a set of dynamically generated checks;
detecting, on occurrence of failure of a validation among the set of validations, a reason for failure of one or more of the set of predefined checks and the set of dynamically generated checks;
converting the detected reason to a prompt by a reason to prompt converter LLM;
optimizing the seed prompt, via a prompt optimizer LLM, in accordance with the prompt obtained from the reason; and
optimizing the wrapper in accordance with the optimized seed prompt in each iteration until the set of predefined checks and the set of dynamically generated checks are cleared by the wrapper to obtain the deliverable guardrail code; and
providing the deliverable guardrail code as a plug-in into the LLM application without modifying the LLM application by treating the LLM application as a black box.

10. The one or more non-transitory machine-readable information storage mediums as claimed in claim 9, wherein a programming language is selected from among a plurality of programming languages by the LLM for generating the deliverable guardrails code.

11. The one or more non-transitory machine-readable information storage mediums as claimed in claim 10, wherein a dynamic check generation LLM is used for the set of dynamically generated checks, wherein the dynamic check generation LLM:
a) obtains the guardrail configuration file as input, and
b) generates a set of possible failure cases applicable for the set validations to provide the set of dynamically generated checks.

12. The one or more non-transitory machine-readable information storage mediums as claimed in claim 11, wherein a validator LLM and a set of scripts check whether the set of possible failure cases appear in the wrapper.
